Europäisches Patentamt

European Patent Office

Office européen des brevets

(19)

(11) Publication number: **0 174 681**
**A2**

(12) **EUROPEAN PATENT APPLICATION**

(21) Application number: **85201338.2**

(22) Date of filing: **21.08.85**

(51) Int. Cl.⁴: **G 05 B 19/405**

(30) Priority: **11.09.84 IT 2261884**

(43) Date of publication of application:
**19.03.86 Bulletin 86/12**

(84) Designated Contracting States:
**AT BE CH DE FR GB IT LI LU NL SE**

(71) Applicant: **CASTEL MAC S.p.A.**
**Via del Lavoro, 9**
**I-31033 Castelfranco Veneto (Treviso)(IT)**

(72) Inventor: **Ferrari, Maurizio**
**Via Nicolò Barabino, 7**
**I-20139 Milano(IT)**

(74) Representative: **Mittler, Enrico et al,**
**c/o Marchi & Mittler s.r.l. Viale Lombardia, 20**
**I-20131 Milano(IT)**

(54) **Electronic control system for process control in a fermentation room.**

(57) A control panel (30) comprises controls (1-14) and visualizers (21, 23-29) for programming and observation of the work cycle of the fermentation room and of the associated values of temperature, humidity and duration. A microprocessor control unit, having received the programmed data and taking into account data taken by temperature and humidity probes (15, 16) positioned in the fermentation room under control, commands the performance of the selected cycle with the appropriate comand of intervention of the heating, cooling, humidification, ventilation and defrosting units (17-21).

./...

EP 0 174 681 A2

Fig. 1

0174681

"Electronic control system for process control in a fermentation room"

The present invention relates to an electronic control system for process control in a fermentation room.

A fermentation room is known to be a room where a doughy mass for bread or some other foodstuff is placed and kept for the time necessary for rising or fermentation of the dough.

Rising time varies with the type of dough but is in any case several hours. This creates problems related to products to be baked and then placed on sale early in the morning such as, in particular, bread.

The solution of these problems is at present represented by fermentation rooms controlled in such a manner as to precede the actual rising phase with one or more rising arrest stages during which the dough is simply kept waiting for rising.

Control of the fermentation room is basically control of temperature, humidity and duration, which makes it possible to vary environmental conditions in the fermentation room between successive steps of the desired duration.

With the development of electronic technique it has become possibile and hence largely preferable to control the operation of the fermentation room in an automatic and programmable manner, leaving to the operator only the duty of operating a few setting and starting controls at the beginning of the cycle.

The object of the present invention is to accomplish an electrtonic control system for fermentation rooms which will provide automatic programmable control of the work cycle in the fermentation room, adapting it to individual production requirements.

According to the invention said object has been achieved by means of an electronic control system characterized in that it comprises a control panel with controls and visualizers for programming and observation of the work cycle in the fermentation room and of the associated temperature, humidity and time values; means for measuring the temperature and humidity inside said room; means for activating heating, cooling, ventilation, humidification and defrosting units associated with said room; and a microprocessor control unit subjected to said control panel controls and using data sensed from said measuring means to control intervention of said means of activation according to cycles and values programmed through said controls.

In other words the control system according to the invention gives the operator the ability to select the most suitable cycle for each case, automatically setting and bringing about the temperature, humidity and duration of the various steps.

After this the system can start and the operator has only to concern himself with removing the product from the fermentation room at the end of the cycle.

The principal choice is that of the cycle, which preferably comprises the succession of the following three steps: (a) first arrest of rising with programmable duration and temperature; (b) second arrest of rising with programmable temperature and humidity; and (c) rising with programmable temperature, humidity and duration.

Once the process has been started and the time of the end of the process and the programmable duration of the first arrest and rising steps have been set, the duration of the second arrest step will be univocally determined and calculated by the control system.

On of the programmable periods may be zeroed (e.g. the first arrest step period) and in this case the cycle is reduced to only two steps.

In all cases for all the steps of the process ventilation of the fermentation room is preferably provided by programmed activation of the ventilation unit. In both rising arrest steps activation of the ventilation unit will be periodic and simultaneous with that of the heating and cooling units and the humidification unit while in the rising step ventilation will be provided continuously for the entire duration of said step.

Defrosting is also provided and is designed to be performed between one step and the next and also at regular intervals as the cycle proceeds.

These and other characteristics of the present invention will be made clear by the following detailed description of a practical embodiment of the present invention which is illustrated to provide a nonlimiting example in the drawings below wherein:-

Fig. 1 shows the overall diagram of an electronic control system for fermentation rooms according to the present invention;

Fig. 2 shows an example of an electronic control panel which may be used as a complementary part of the control system of Fig. 1;

Fig. 3 shows schematically the performance of an example of a work cycle in the fermentation room.

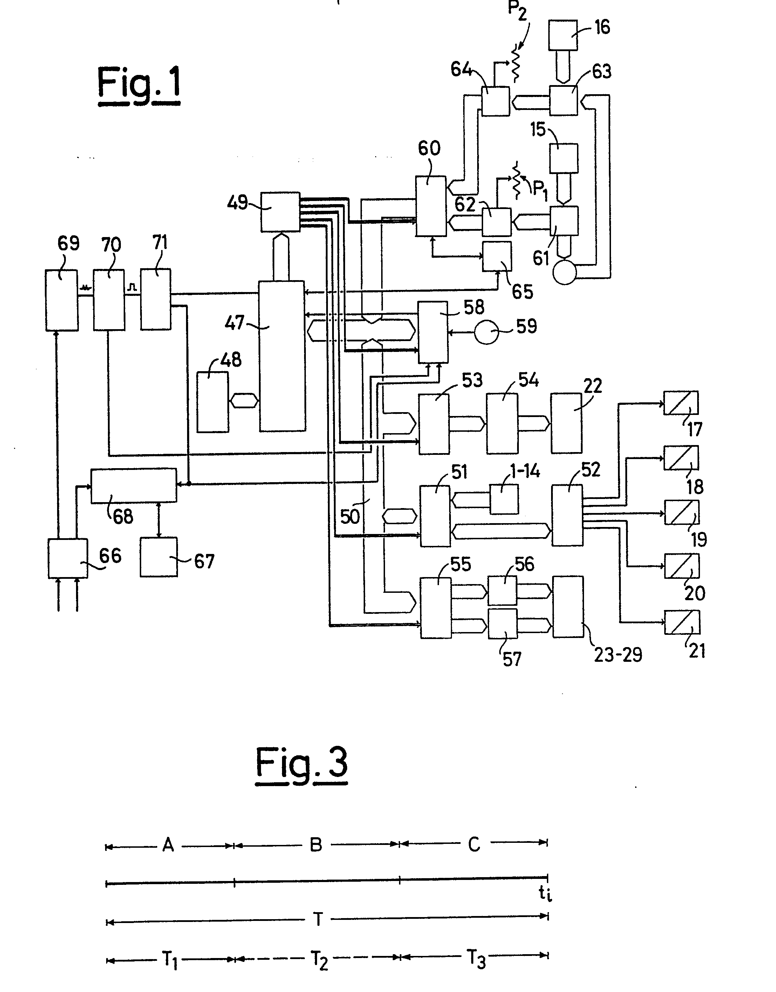

The control system illustrated in Fig. 1 comprises basically a microprocessor control unit with which are associated a control keyboard 1-14, a temperature probe 15 and a humidity probe 16 housed inside the fermentation room; a group of actuation relays 17-21, respectively for fermention room heating, cooling, humidification, ventilation and defrosting units; a 4-place digital visualizer to indicate cycle and controlled value data; and a group of warning lights 23-29 for signalling the selected cycle and the various steps and operations being performed.

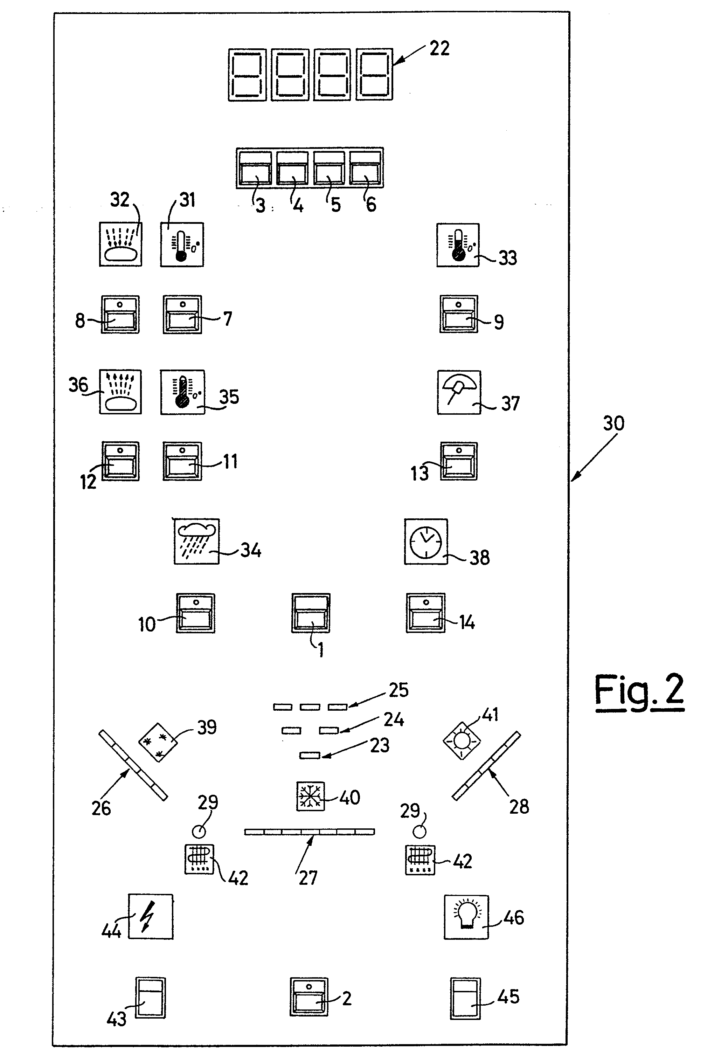

The keyboard 1-14, the visualizer 22 and the warning lights 23-29 are constructed in a single control panel 30 as shown in Fig. 2. Said Fig. 2 shows that the keyboard 1-14 comprises in reality a cycle selection pushbutton 1, a programme starting pushbutton 2, four pushbuttons in a row 3-6 for setting the programmed values for the control unit, and eight selection pushbuttons 7-14 with related identifiction symbols 31-38 for the parameters or functions such as temperature, humidity, et cetera, whose values are set with pushbuttons 3-6.

For a more precise indication of the selection pushbuttons 7-14 we may consider a typical work cycle such as the one set forth above and represented in diagram in Fig. 3, i.e. with step A the arrest of rising with programmable duration and temperature, which are generally negative; step B the second arrest of rising with programmable temperature and humidity; and step C rising with programmable temperature, humidity and duration. In such an assumed cycle the selection pushbuttons 7 and 8 concern temperature and duration of the first arrest step, the pushbutton 9 concerns the temperature of the second arrest step, the pushbutton 10 concerns the humidity of of the second arrest and rising steps, the pushbuttons 11 and 12 concern the temperature and the duration of the rising step, the pushbutton 13 concerns the time of baking or time of end of cycle, and the pushbutton 14 concerns local time.

The warning lights 23-29 comprise in turn three warning lights 23-25 for signalling the maximum duration of the selected cycle, e.g. 24, 48 or 72 hours; three warning lights 26-28 with their corresponding identification symbols 39-41 for signalling the step under way, respectively first arrest, second arrest and rising;

- 5 -

0174681

and a pair of warning lights 29 with their corresponding identification symbols 42 for signalling the defrosting operation.

The control panel shown in Fig. 2 comprises a main power switch 43 with its corresponding symbol 44 and an inside light switch 45 with its corresponding symbol 46.

Returning to Fig. 1, the control unit shown therein comprises as its basic component a microprocessor 47 with associated programming memory (EPROM) 48. The microprocessor 47 controls a device decoding and selection circuit 49, while it is able to exchange data and directions with the various sectors of the control unit through data and direction buses 50. An interface 51 connects the microprocessor 47 to the control keyboard 1-14 as well as to a control amplifier for the actuation relays 17-21. Another interface 53 connects the microprocessor 47 to a control amplifier 54 for digital visualization 22 and another interface 55 connects said microprocessor to two control amplifiers 56 and 57 for the warning light 23-29.

To control time, an integrated circuit with timing functions with memory (RAM) 58 which utilizes a quartz oscillator 59 is connected to the microprocessor 47.

To control temperature and humidity are provided respectively temperature and humidity measuring circuits whose output signals flow together in an analog/digital convertor 60. The temperature measuring circuit comprises the temperature probe 15 whose output signal is transmitted to the convertor 60 after comparison with the preset values in a resistive comparator 61 and amplification in an amplifier 62 equipped with a threshold calibrating potentiometer P1. The humidity circuit comprises the humidity probe whose output signal is sent to the convertor 60 after comparison with a preset value in a resistive comparator 63 and amplification in an

- 6 -

0174681

amplifier 64 equipped with a threshold calibrating potentiometer P2. It should be noted that the comparator 63 also receives the output of the comparator 61 so that the humidity circuit can make allowance for the sensed temperature. To provide for operation of the convertor 60 a signal of appropriate cadence and form is transmitted to it through the shaper by the microprocessor 47 under the control of the oscillator 59.

The control unit shown in Fig. 1 comprises a power supply circuit which comprises a feeder 66 and a battery 67 which can be selected by means of an electronic commutator 68. On the output of the feeder 66 are placed in succession a photocoupler 69, a timer 70, and a reset circuit 71 with outputs connected to the microprocessor 47, to the memory (RAM), and to the electronic commutator 68.

The control system of Fig. 1 with the control panel of Fig. 2 can, as already said, control automatically and in a programmed manner a work cycle of the type illustrated in Fig. 3, i.e. with step A, first arrest of rising, step B, second arrest of rising, and step C, rising. The various possible cycles are all of the same type but can differ as to duration. Said duration can for example be the maximum of 24 hours for a first cycle, the maximum of 48 hours for a second cycle and the maximum of 72 hours for a third cycle. The choice of the cycle will consist of choosing a cycle of one duration or another.

When the cycle has been selected and the machine started, baking time and end of cycle time $t_1$ being known or set as needed, from the programming of the duration $T_1$ of the first arrest step and of the duration $T_3$ of the rising step will be automatically derived the duration $T_2$ of the second arrest step, which is not programmable on the control panel 30 but is calculated automatically by the control unit. One or both of the durations $T_1$-$T_3$ may be nil and the corresponding steps may be lacking.

Performance of a work cycle such as the one shown in Fig. 3 may be programmed on the control panel shown in Fig. 2 and then assured by the control unit shown in Fig. 1 in the following manner.

The operator first chooses with the pushbutton 1 the desired work cycle and then sets with pushbuttons 3-6 the various values of temperature, humidity and duration, having selected each time the various parameters and functions with the selection pushbuttons 7-14. Each value programmed appears each time on the digital visualizer 22, while one of the warning lights 23, 24 or 25 indicates the selected cycle. The cycle is then started by pressing the starting pushbutton 2.

As the data are fed in with the keyboard 1-14 they continue in the control unit shown in Fig. 1 through the interface 51 and then finish in the microprocessor 47 which analyzes them, compares them with the contents of the programme memory 48 and transmits the processed data to the visualizer 22 through the interface 53 and the amplifier 54. At the same time the microprocessor transmits the processed data to the device decoding and selection circuit 49, which coordinates the various operation selections and, through the interface 55 and the amplifiers 56 and 57, to the warning lights (LED) 23-29. To programme time the integrated circuit also comes into play with timing functions with memory (RAM) 58 which by making use of the quartz oscillator 59 converts the data into a schedule before transmitting them to the interface 53 and thence to the visualizer 22. Passage from one step to the next is controlled by the microprocessor on the basis of the timing data fed in with the keyboard 1-14.

When the work cycle has been started the control unit shown in Fig. 1 ensures performance of the desired functions and maintenance of the desired environment in the various steps of the cycle as well as passage from one step to the next. In particular it ensures temperature control of the neutral point type, i.e. with heating or cooling turned on when the temperature deviates by a predetermined value, in every step of the cycle. In the second arrest step B and rising step C the control unit also ensures humidity control in one direction only, i.e. with only the possibility of increasing humidity. Periodically during steps A and B, i.e. when the heating, cooling and humidifying units are operating, and continuously during step C, ventilation is also operating. Periodically during performance of the cycle and always when passing from one step to the next automatic defrosting of the fermentation room is provided and performed with resistances or merely by ventilation depending on the programmed temperature.

Going into greater detail, temperature control is performed utilizing the analog output sensing signal from the temperature probe 15 which after comparison in the comparator 61 and then amplification is converted into digital by the convertor 60 and then transmitted to the microprocessor 47. Said microprocessor 47 compares the data taken with the programme memory 48, receiving therefrom the proper instructions and then in addition to feeding the visualizer 22 sends instructions to the interface 51 which through the amplifier 52 transmits the proper commands to the actuation relays 17 or 18 or 20 respectively for operation of the heating or cooling units and for simultaneous ventilation. At the same time the microprocessor 47 feeds the device decoding and selection circuit 49 for coordination of the operations.

Humidity control is in turn performed by using the analog measuring signal output from the humidity probe 16 and also allowing for the incoming temperature control signal. The compared and modified analog signal is converted into digital by the convertor 60 which then transmits it to the microprocessor 47. Said microprocessor 47 compares the data taken with the programme memory 48, receiving therefrom the proper instructions and then in addition to feeding the visualizer 22 sends instructions to the interface 51 which through the amplifier 52 transmits the proper commands to the actuation relays 19 and 20 for actuation of the humidification unit and simultaneously the ventilation unit.

The defrosting function is performed automatically, i.e. without external programming. As required the microprocessor 47 analyzes the progress of the cycle, compares itself with the programme memory 48 and through the interface 51 and the amplifier 52 commands the actuation relay 21 for actuation of the defrosting unit. Simultaneously, the microprocessor 47 sends data to the circuit 49 for coordination of the various steps and, through the interface 55 and the amplifiers 56 and 57, to the warning lights 29 for signalling of the function under way.

The various controls and functions are coordinated by the microprocessor 47 with the aid of the programme memory 48 on the basis of the programmed data fed in with the keyboard 1-14 and the data taken and supplied by the temperature probe 15 and the humidity probe 16, so as to ensure correct performance of the selected cycle.

The main power supply may be interrupted during a cycle. In this case the data saving and reset mechanism comprising the photocoupler 69, the timer 70 and the reset circuit 71 operates. The photocoupler 69 warns of the lack of voltage at the output of the mains feeder 66 and communicates it to the timer 70 which emits a priority wave form which through the reset circuit 71 goes to the micro processor 47 and to the integrated circuit 58 which provides immediately therefor making reference to the programme data of the memory (EPROM) 48 to develop a suitable saving function. All the data in circulation are immediately called back by the microprocessor and memorized while the microprocessor with the electronic commutator 68 turns on the buffer battery 67. This condition prevails until when mains voltage returns to normal the optical sensor 69 communicates this information to the microprocessor 47 which releases the specimen battery 67 which begins to recharge and releases the memorized data to the various circuits involved.

CLAIMS

1. Electronic control system for control of the work cycle of a fermentation room characterized in that it comprises a control panel with controls and visualizers for programming and surveillance of the work cycle of the fermentation room and of the associated values of temperature, humidity and duration; means for measuring temperature and humidity inside said fermentation room; means for actuating heating, cooling, ventilating, humidifying and defrosting units associated with said fermentation room; and a microprocessor control unit subject to said commands of the control panel and employing the data received from said measurement means to control the intervention of said actuation means in accordance with values and cycles programmed with said commands.

2. Electronic control system according to claim 1 characterized in that said control panel comprises controls for the selection of the work cycle of the fermentation room and said microprocessor is programmed in such a manner as to command the performance of one or another of a plurality of work cycles of the fermentation room in accordance with the selection performed.

3. Electronic control system according to claim 2 characterized in that said work cycles comprise one or more of the following work steps: a) first arrest of rising with programmable duration and temperature; b) second arrest of rising with programmable temperature and humidity; c) rising with programmable temperature, humidity and duration.

4. Electronic control system according to claim 3 characterized in that said control panel comprises controls for programming the temperature in the aforesaid first arrest, second arrest and rising steps and said microprocessor is programmed in such a manner as to command intervention of said means of actuation of the heating and cooling units for programmed temperature control in accordance with the data supplied by said commands and by said temperature measuring means.

5. Electronic control system according to claim 4 characterized in that said temperature control is of the neutral point type, i.e. with intervention of said heating and cooling units according to whether the temperature is lower or higher than a preset value.

6. Electronic control system according to claim 3 characterized in that said control panel comprises controls for the programming of the humidity in the aforesaid second arrest and rising steps and said microprocessor is programmed in such a manner as to command intervention of said means of actuation of the humidification unit for programmed humidity control in accordance with the data supplied by said commands and by said humidity measuring means.

7. Electronic control system according to claims 4 and 6 characterized in that said microprocessor is also programmed in such a manner as to command the periodic intervention of said means of actuation of the ventilation unit simultaneously with the intervention of said means of actuation of the heating and cooling units and of the humidification unit during the first and second arrest steps and the continuous intervention of said means of actuation of the ventilation unit during the rising step.

8. Electronic control system according to claim 3 characterized in that said control panel comprises controls for programming the duration in said first arrest and rising steps and said microprocessor is programmed in such a manner as to command passage from one step to another of the work cycle in accordance with the data supplied by said commands.

9. Electronic control system according to claim 1 characterized in that said microprocessor is programmed in such a manner as to command automatic intervention of said means of activation of the defrosting unit upon passage from one step to the other.

10. Electronic control system according to claim 9 characterized in that said microprocessor is programmed in such a manner as to command the intervention of said means of actuation of said defrosting unit even at regular intervals in the course of the performance of the cycle.

11. Electronic control system according to claim 1 characterized in that said visualizers comprise a digital visualizer for indication of the data of the cycle and of the controlled values and warning lights for signalling of the selected cycle and of the various steps and operations under way.

1/2

## Fig.1

## Fig.3

**Fig.2**